# EUROPÄISCHE PATENTANMELDUNG

(11) **EP 4 692 969 A1**
(43) Veröffentlichungstag der Anmeldung: **11.02.2026**
(21) Anmeldenummer: 24193963.6
(22) Anmeldetag: 09.08.2024
(51) Int. Cl.: G05B 23/02

(54) **VERFAHREN ZUR AKTUALISIERUNG EINER INSTALLATIONSVORGABE BEI EINER COMPUTERGESTÜTZTEN INSTALLATION EINER INDUSTRIELLEN ANLAGE**

(71) Anmelder: Murrelektronik GmbH, 71570 Oppenweiler (DE)
(72) Erfinder: Binder, Sven, 71522 Backnang (DE); Zeller, Paul, 74223 Flein (DE); Pfestorf, Sebastian, 71570 Oppenweiler (DE)
(74) Vertreter: Bösherz Goebel Patentanwälte

(57) **Zusammenfassung**

Die Erfindung betrifft ein Verfahren (100) zur Aktualisierung einer Installationsvorgabe (250) für eine computergestützte Installation, insbesondere Neuinstallation und/oder Wartung, einer industriellen Anlage (50) mittels eines computergestützten Installationssystems (60), um die Installationsvorgabe (250) an eine tatsächliche Ausführung der Installation anzupassen, umfassend:
- Ermitteln (101) einer Installationsfortschrittsspezifikation (210), die wenigstens einen bereits in Übereinstimmung mit der Installationsvorgabe (250) installierten Teil der Anlage (50) spezifiziert,
- Ermitteln (102) einer Abweichungsspezifikation (220), die wenigstens einen veränderten Teil der Anlage (50) spezifiziert, welcher abweichend von der Installationsvorgabe (250) installiert worden ist oder installiert werden soll,
- Durchführen (103) der Aktualisierung der Installationsvorgabe (250) auf Basis der ermittelten Installationsfortschrittsspezifikation (210) und der ermittelten Abweichungsspezifikation (220).

## Beschreibung

Die vorliegende Erfindung betrifft ein Verfahren zur Aktualisierung einer Installationsvorgabe. Ferner bezieht sich die Erfindung auf ein Computerprogramm sowie eine Vorrichtung zur Datenverarbeitung.

### Stand der Technik

Es ist aus dem Stand der Technik bekannt, dass eine Installation von industriellen Anlagen durch den Einsatz von CAD-Software und Simulationstools unterstützt werden kann. Diese Werkzeuge ermöglichen es, die Anlagenplanung und -installation virtuell durchzuführen und somit mögliche Fehler und Probleme im Vorfeld zu erkennen und zu beheben. Darüber hinaus können auch robotergestützte Systeme eingesetzt werden, um die Installation von Anlagen zu automatisieren und zu vereinfachen. Diese Systeme können beispielsweise bei der Montage von schweren Bauteilen oder bei der Verkabelung eingesetzt werden. Insgesamt ermöglicht der Einsatz von computergestützten Werkzeugen eine schnellere und effizientere Installation von industriellen Anlagen.

Nachteilhaft bei den bekannten Lösungen ist, dass manuelle Abweichungen von einer Installationsvorgabe wie von einem digitalen Schaltplan bei der Erstinstallation oft unberücksichtigt bleiben oder manuell im Schaltplan angepasst werden müssen. Dies kann zu Fehlern und erhöhtem Aufwand bei einer späteren Wartung führen und die Effizienz der Anlage beeinträchtigen. Außerdem kann die manuelle Anpassung des Schaltplans zeitaufwendig sein.

### Offenbarung der Erfindung

Gegenstand der Erfindung ist ein Verfahren mit den Merkmalen des Anspruchs 1, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur Aktualisierung einer Installationsvorgabe für eine computergestützte Installation, insbesondere Neuinstallation (d. h. Erstinstallation) und/oder Wartung und/oder Erweiterung und/oder Reparatur, einer industriellen Anlage mittels eines, vorzugsweise computergestützten, Installationssystems. Das Verfahren und insbesondere die Aktualisierung kann dazu dienen, die Installationsvorgabe an eine tatsächliche Ausführung der Installation anzupassen. Dabei kann die Aktualisierung automatisiert vorgenommen werden, vorzugsweise durch eine erfindungsgemäße Vorrichtung zur Datenverarbeitung.

Der Ausdruck "computergestützt" kann sich darauf beziehen, dass der Installationsprozess von einer Software unterstützt wird, die auf einem Computer läuft. Das computergestützte Installationssystem kann somit ggf. dazu ausgeführt sein, eine Vielzahl von Installationsaufgaben mittels dieser Software zu automatisieren und zu vereinfachen. Dadurch wird die Installation schneller und effizienter, da menschliche Fehler minimiert werden. Zudem kann das Installationssystem die Installationsergebnisse bspw. automatisch überprüfen und bei Problemen entsprechende Fehlermeldungen ausgeben.

Bevorzugt kann die Aktualisierung eine automatisierte Angleichung und/oder Optimierung der Installationsvorgabe umfassen, bei welcher z. B. die Verbindungen und/oder die Komponentenauswahl an die tatsächliche Ausführung der Installation und insbesondere an eine Abweichung zur Installationsvorgabe angepasst werden.

Um die Aktualisierung durchzuführen, kann zunächst eine Installationsfortschrittsspezifikation ermittelt werden. Die Installationsfortschrittsspezifikation kann dabei wenigstens einen bereits in Übereinstimmung mit der Installationsvorgabe installierten Teil der Anlage spezifizieren. Dabei kann die Installationsfortschrittsspezifikation vorzugsweise digital ausgeführt sein und ggf. automatisiert ermittelt werden. Die Installationsfortschrittsspezifikation kann auch angeben, dass bislang kein Teil der Anlage in Übereinstimmung mit der Installationsvorgabe installiert worden ist. Es kann somit auch eine Abweichung bereits ab dem ersten Installationsschritt miteinbezogen werden. Alternativ kann es möglich sein, dass die Installationsfortschrittsspezifikation erst dann verfügbar ist, wenn bereits ein Teil der Anlage in Übereinstimmung mit der Installationsvorgabe installiert worden ist.

Weiter kann eine Abweichungsspezifikation ermittelt werden, die wenigstens einen veränderten Teil der Anlage spezifiziert, welcher abweichend von der Installationsvorgabe installiert worden ist oder installiert werden soll. Somit spezifiziert die Abweichungsspezifikation eine Abweichung gegenüber der Installationsvorgabe, die bei der tatsächlichen Ausführung der Installation vorliegt. Auch die Abweichungsspezifikation kann hierbei digital ausgeführt sein und ggf. automatisiert ermittelt werden.

Das Durchführen der Aktualisierung der Installationsvorgabe kann sodann auf Basis der ermittelten Installationsfortschrittsspezifikation und der ermittelten Abweichungsspezifikation erfolgen. Damit ermöglicht das Verfahren eine Effizienzsteigerung bei der Installation einer Anlage, indem durch das Installationssystem die Installationsvorgabe automatisch an Änderungen in der tatsächlichen Installation angepasst und vorzugsweise optimiert und somit eine schnellere Reaktion auf Veränderungen ermöglicht wird. Die Erfindung kann ggf. auch eine Echtzeit-Überwachung und -Aktualisierung der Installationsvorgabe bieten. Die Überprüfung des Installationsfortschritts und der Abweichungen kann ferner auch als Kontrollmechanismus für die Einhaltung der Installationsvorgabe dienen, was zu einer höheren Qualität der Installation beiträgt.

Ferner trägt die genaue Identifizierung von bereits installierten Teilen der Anlage zur Aufwands- und Kostenreduzierung bei, indem eine unnötige Anpassungen und Neuinstallationen von bereits installierten Komponenten der Anlage vermieden werden können.

Das Verfahren kann ferner die Dokumentation der Installation verbessern, was zukünftige Änderungen oder Wartungsarbeiten erleichtert. Hierzu kann die aktualisierte Installationsvorgabe ggf. auch für die spätere Verwendung nicht-flüchtig gespeichert und/oder zentral, z. B. auf einem Cloud-Datenspeicher, und/oder in einer Datenbank und/oder in einer digitalen Anlagendokumentation hinterlegt werden.

Die computergestützte Installation kann im Rahmen einer Neuinstallation der Anlage, aber auch im Rahmen einer Wartung und/oder Erweiterung und/oder Modifikation und/oder Prüfung und/oder Reparatur einer bereits installierten, bestehenden Anlage verwendet werden. Die Anlage kann als eine industrielle Anlage, vorzugsweise als eine elektrische Maschine, ausgeführt sein und somit beispielsweise eine elektrische und/oder mechanische und/oder hydraulische und/oder pneumatische und/oder fluidtechnische Anlage und/oder eine Produktionsanlage, eine Fertigungsanlage, eine Verarbeitungsanlage oder eine Maschinenanlage umfassen. Dabei können für die Anlage mehrere Komponenten zur Installation vorgesehen oder bereits installiert sein, wie z. B.:
- Kabel und/oder
- Steckverbinder und/oder
- Aktoren, wie bspw. Motoren, und/oder
- Sensoren, wie bspw. Lichtschranken, und/oder
- Module/Verteiler, z. B. Feldbusmodule,
und/oder dergleichen. Die Module/Verteiler sind bspw. dazu ausgeführt, mehrere weitere der Komponenten dezentral zu verschalten. Die Module/Verteiler können dabei die Aktoren und/oder Sensoren mit einer zentralen Steuerung und/oder dezentralen Steuerung verbinden. Ferner können auch alternativ oder zusätzlich zu einer zentralen Steuerung, wie einer SPS, dezentrale Steuerungen vorgesehen sein.

Ein Beispiel für eine industrielle Anlage, in der eine Motorsteuerung oder Sensoren wie Lichtschranken zum Einsatz kommen, ist eine automatisierte Fertigungsanlage für die Produktion von elektronischen Bauteilen. In dieser können bspw. Roboterarme mit präziser Motorsteuerung eingesetzt werden, um Bauteile zu bewegen und zu montieren. Ein weiteres Beispiel ist eine Verarbeitungsanlage für die Herstellung von Lebensmitteln, in der Sensoren eingesetzt werden, um den Durchfluss von Zutaten zu messen und zu regulieren. Ferner kann als eine industrielle Anlage eine pneumatische Anlage zur Steuerung von Druckluft in einer Fabrik zum Einsatz kommen, in der Sensoren eingesetzt werden, um den Druck in den Leitungen zu messen und die Ventile entsprechend zu steuern.

Die computergestützte Installation kann ferner neben der Unterstützung bei dem Einbau und der Verbindung von Komponenten optional auch eine automatisierte Konfiguration der Anlage bereitstellen, indem sie beispielsweise die Einstellungen und Parameter der Anlage an die Anforderungen des Prozesses, insbesondere Verarbeitungs- und/oder Produktionsprozesses, anpasst. Die Aktualisierung durch das erfindungsgemäße Verfahren kann daher optional auch die Konfiguration betreffen.

Das Verfahren kann die Verwendung und/oder Bereitstellen einer Installationsvorgabe umfassen. Dabei kann die Installationsvorgabe einen digitalen Schaltplan und/oder mechanischen und/oder fluiden und/oder hydraulischen und/oder pneumatischen Plan aufweisen, in welchem ein (elektrischer/mechanischer/fluider/hydraulischer/pneumatischer) Aufbau der Anlage zumindest teilweise repräsentiert sein kann. Der jeweilige Plan kann digitalisiert sein, d.h. bspw. in einem Datenspeicher nicht-flüchtig hinterlegt und digital auswertbar sein.

Durch die Bereitstellung der Installationsvorgabe kann ein zumindest teilweiser oder gesamter Aufbau zumindest eines Teils der Anlage oder der gesamten Anlage vorgegeben sein. Darunter ist insbesondere zu verstehen, dass die Informationen aus der Installationsvorgabe genutzt werden können, um einem Installateur vorzugeben, wie die Anlage aufgebaut und/oder Verbindungen vorgenommen und/oder Geräte eingerichtet werden sollen.

Verteiler, vorzugsweise Module, bevorzugt Feldbus- und/oder IO-Link-Module, können bei der Anlage vorgesehen sein, um Komponenten der Anlage miteinander zu verbinden. Hierzu können die Verteiler mehrere Anschlüsse aufweisen, welche eine Energie- und/oder Datenverbindung der Komponenten untereinander und/oder mit einer Steuerung der Anlage herstellen.

Bei dem zumindest teilweisen Aufbau können ein oder mehrere Komponenten mit zumindest einem Verteiler, vorzugsweise Modul, zur Bereitstellung von Automatisierungsfunktionen miteinander im Feld und/oder dezentral elektrisch verbunden sein. Mit anderen Worten können an einem jeweiligen Verteiler der Anlage ein oder mehrere der Komponenten der Anlage verbunden, d.h. insbesondere elektrisch und/oder mechanisch und/oder über Funk angeschlossen, sein.

Für einen Betrieb der Anlage können die Automatisierungsfunktionen durch mindestens eine Steuerungseinrichtung gesteuert werden. Die jeweilige Steuerungseinrichtung kann eine zentrale Steuerung wie eine SPS (Speicherprogrammierbare Steuerung) oder eine dezentrale Steuerung umfassen. Hierzu können die Komponenten und/oder Verteiler über eine geeignete Schnittstelle und/oder ein Kommunikationssystem wie einen Feldbus mit der jeweiligen Steuerungseinrichtung kommunizieren.

Die computergestützte Installation kann vorzugsweise dadurch computergestützt erfolgen, dass automatisiert Installationsvorschläge für den Benutzer, welcher die Installation durchführt, anhand der Installationsvorgabe generiert werden. Hierzu kann der Benutzer z. B. eingeben, welche der Komponenten installiert werden sollen, um als Installationsvorschlag ein oder mehrere mögliche Installationsorte für den Einbau und/oder Anschlüsse für die Verbindung der Komponente ausgegeben zu bekommen.

Das erfindungsgemäße Verfahren kann somit umfassen:
- Erfassen einer Eingabe eines Benutzers, welche eine zu installierende Komponente angibt,
- Ausgeben wenigstens eines Installationsvorschlags als Reaktion auf die Eingabe, um ein oder mehrere mögliche Installationsorte in der Anlage für den Einbau und/oder Anschlüsse für die Verbindung der Komponente anzugeben,
- Verifizieren, dass die Installation der Komponenten entsprechend dem wenigstens einen Installationsvorschlag erfolgt ist, z. B. anhand einer Benutzerbestätigung und/oder automatisiert anhand einer elektrischen Auswertung der Komponente.

Der Installationsfortschritt kann auf diese Weise automatisiert nachverfolgt werden.

Bspw. ist der weitere Schritt vorgesehen:
- Anpassen der Installationsfortschrittsspezifikation auf Basis der Verifikation, um den Installationsfortschritt zu dokumentieren, und insbesondere, um den in Übereinstimmung mit der Installationsvorgabe installierten Teil der Anlage zu spezifizieren.

Dabei ist es denkbar, dass sich der Benutzer nicht an die Installationsvorgabe bzw. an den Installationsvorschlag hält. So machen es die realen Umstände bei der Installation ggf. notwendig, eine Abweichung von der Installationsvorgabe vorzunehmen. Diese Abweichung kann durch eine Abweichungsspezifikation angegeben werden, die den wenigstens einen veränderten Teil der Anlage spezifiziert, welcher abweichend von der Installationsvorgabe installiert worden ist oder installiert werden soll.

Das erfindungsgemäße Verfahren kann daher die weiteren Schritte umfassen:
- Erfassen einer bei der Installation vorkommenden Abweichung von der Installationsvorgabe auf Basis der Verifikation, insbesondere einer Veränderung eines Teils der Anlage, die nicht von der Installationsvorgabe abgedeckt ist,
- Bestimmen der Abweichungsspezifikation auf Basis der erfassten Abweichung, insbesondere, um den veränderten Teil der Anlage anzugeben.

Allgemein kann im Rahmen der Erfindung als ein jeweiliger Teil der Anlage wenigstens eine Komponente (z.B. die zu installierende Komponente und/oder wenigstens eine weitere Komponente) und/oder eine teilweise Topologie und/oder eine teilweise Verbindungs- und/oder Anschlusskonfiguration der Anlage bezeichnet werden. Weiter kann der veränderte Teil mindestens eine in dem geänderten Teil der Anlage installierte Komponente, vorzugsweise Verteiler oder Gerät, umfassen. Die Veränderung kann dabei eine Veränderung sein, welche in der Installationsvorgabe und/oder in dem wenigstens einem Installationsvorschlag nicht explizit vorgesehen war.

Vorteilhafterweise kann im Rahmen der Erfindung vorgesehen sein, dass das Durchführen der Aktualisierung ferner umfasst:
- Ermitteln einer Vergleichsspezifikation, die bevorzugt aus einem automatisierten Vergleich der ermittelten Installationsfortschrittsspezifikation mit der Installationsvorgabe resultiert.

Die Vergleichsspezifikation kann dazu vorgesehen sein, um wenigstens einen noch zu installierenden Teil der Anlage zu ermitteln, welcher noch nicht installiert worden ist. Mit anderen Worten kann die Vergleichsspezifikation den wenigstens einen noch zu installierenden Teil spezifizieren. Hierzu können bspw. in der Installationsvorgabe spezifizierte Komponenten abzüglich der in der Installationsfortschrittsspezifikation als "installiert" gekennzeichnete Komponenten als noch zu installierende Komponenten festgelegt werden.

Des Weiteren kann das Durchführen der Aktualisierung umfassen:
- Anpassen der Installationsvorgabe auf Basis der ermittelten Abweichungsspezifikation, um die Abweichung bei der Installation des wenigstens einen veränderten Teils der Anlage in der Installationsvorgabe aufzunehmen.

Die Abweichungsspezifikation kann somit eine tatsächliche Abweichung, welche bei der realen Installation des wenigstens einen veränderten Teils der Anlage aufgetreten oder geplant ist, spezifizieren. Die Abweichung kann z. B. durch einen Installateur aufgrund der praktischen Bedingungen bei der Installation vorgenommen worden sein. Ferner kann die Abweichung z. B. dadurch notwendig geworden sein, dass ursprünglich für die Installation durch die Installationsvorgabe eingeplante Komponenten nicht verfügbar waren und ersetzt werden mussten. Auch kann die Abweichung ggf. eine Veränderung der Kabellänge umfassen. Auch kann die Abweichung ggf. einen veränderten Komponententyp umfassen, z. B. eine Lichtschranke anstelle eines ursprünglich geplanten Tasters. Die Installationsvorgabe kann dann nachträglich angepasst werden, um diese Abweichung aufzunehmen, z. B. durch ein Ersetzen der ursprünglich geplanten Komponente durch die neue Komponente im Schaltplan.

Die Anpassung kann automatisiert erfolgen. Es kann sich dabei allerdings ergeben, z. B. durch eine ebenfalls automatisiert durchgeführte Kompatibilitätsbeurteilung, dass die Abweichung weitere Anpassungen in der Installationsvorgabe außerhalb des veränderten Teils der Anlage notwendig macht. Diese weiteren Anpassungen werden dann bevorzugt derart automatisiert geplant, dass die Anpassungen auf den noch zu installierenden Teil der Anlage beschränkt werden.

Es kann schließlich das Durchführen der Aktualisierung außerdem umfassen:
- Anpassen der Installationsvorgabe auf Basis der ermittelten Vergleichsspezifikation und beschränkt auf den wenigstens einen noch zu installierenden Teil der Anlage, um den wenigstens einen noch zu installierenden Teil in der Installationsvorgabe an die aufgenommene Abweichung anzupassen, und insbesondere den bereits in Übereinstimmung mit der Installationsvorgabe installierten Teil der Anlage (im Wesentlichen) unverändert zu lassen.

Mit anderen Worten kann zunächst bestimmt werden, welcher Teil der Anlage noch nicht installiert worden ist, um dann bei der Aktualisierung die Veränderung der Installationsvorgabe auf diese noch nicht installierten Teile der Anlage zu beschränken. Falls dennoch kleinere Änderungen am bereits installierten Teil der Anlage vorgenommen werden müssten, kann dies optional zunächst verhindert werden und ggf. erst durch eine Benutzerabfrage freigegeben werden. Alternativ könnte in einem solchen Fall eine Fehlermeldung ausgegeben werden. Es ist entsprechend je nach Anlagenaufbau denkbar, dass es Grenzfälle gibt, in denen eine Veränderung unvermeidbar ist. In diesen Fällen kann daher optional eine Benutzereingabe angefordert werden, um zu bestätigen, dass eine teilweise Veränderung der bereits installierten Komponenten genehmigt wird.

Das Anpassen der Installationsvorgabe auf Basis der ermittelten Abweichungsspezifikation kann erfolgen, um die Abweichung bei der Installation in der Installationsvorgabe aufzunehmen, z. B. mindestens eine der Folgenden: einen veränderten Anschluss der zu installierenden Komponente, ein anderer Typ der Komponente, eine andere elektrische Spezifikation der Komponente, einen abweichenden Installationsort der Komponente, eine veränderte Kabellänge, eine veränderte Steckverbinder, eine veränderte Sensortechnologie, eine veränderte Kommunikationstechnologie.

Das Anpassen der Installationsvorgabe auf Basis der Vergleichsspezifikation und beschränkt auf den wenigstens einen noch zu installierenden Teil der Anlage kann erfolgen, um weitere Teile der Anlage in der Installationsvorgabe an die aufgenommene Abweichung anzupassen. Diese Anpassung kann z. B. eine Optimierung der verbleibenden Teile, insbesondere der Komponenten und/oder der Topologie und/oder der Verbindungen unter Berücksichtigung der neuen Situation umfassen. Diese Anpassung wird dann bevorzugt auf den wenigstens einen noch zu installierenden Teil der Anlage beschränkt, um einen höheren Aufwand durch eine Neuinstallation von Teilen der Anlage zu vermeiden. Es wird der bereits installierte Teil der Anlage in der Installationsvorgabe somit möglichst oder vollständig unverändert gelassen. Das Verfahren kann auf diese Weise dazu beitragen, die Effizienz von Installationsprozessen zu steigern und den Aufwand sowie die Kosten zu reduzieren.

Des Weiteren ist es im Rahmen der Erfindung optional möglich, dass das Durchführen der Aktualisierung ferner umfasst:
- Anpassen der Installationsvorgabe beschränkt auf den wenigstens einen veränderten Teil und/oder auf den wenigstens einen noch zu installierenden Teil der Anlage, insbesondere, um den wenigstens einen noch zu installierenden Teil in der Installationsvorgabe an den wenigstens einen veränderten Teil und/oder an die aufgenommene Abweichung anzupassen, und bevorzugt dabei den bereits in Übereinstimmung mit der Installationsvorgabe installierten Teil der Anlage zumindest teilweise oder überwiegend oder im Wesentlichen, d. h. zu mindestens 98 % oder 99 % oder vollständig, unverändert zu lassen.

Dies hat den Vorteil, dass nachträgliche aufwendige Anpassungen an den bereits real installierten Teil der Anlage vermieden werden können. Weiter ist es denkbar, dass die Beschränkung auf den wenigstens einen noch zu installierenden Teil der Anlage derart erfolgt, dass eine Obergrenze festgelegt bist, bis zu welcher eine Veränderung am bereits in Übereinstimmung mit der Installationsvorgabe installierten Teil der Anlage toleriert werden kann. Alternativ oder zusätzlich kann auch eine Benutzerabfrage vorgenommen werden, ob und bis zu welchem Umfang eine Veränderung am bereits in Übereinstimmung mit der Installationsvorgabe installierten Teil der Anlage vorgesehen werden kann. Auch ist es möglich, dass vorgesehen ist, dass der bereits in Übereinstimmung mit der Installationsvorgabe installierte Teil der Anlage im Wesentlichen, d. h. vollständig oder zu mindestens 98 % oder 99 %, unverändert gelassen wird.

Ferner ist es denkbar, dass das computergestützte Installationssystem eine digitale Entwicklungsumgebung zur Planung der Anlage umfasst, um die computergestützte Installation und die Aktualisierung zumindest teilweise durch die digitale Entwicklungsumgebung vorzunehmen. Dies hat den Vorteil, dass durch die Integration einer digitalen Entwicklungsumgebung in das Installationssystem eine effiziente und präzise Planung der industriellen Anlage ermöglicht wird. Die digitale Umgebung erlaubt es insbesondere, die Installation und Anpassung der Anlage computergestützt durchzuführen, was zu einer Reduktion von Fehlern und Kosten führen kann. Zudem ermöglicht sie vorzugsweise eine dynamische Anpassung der Anlage, indem sie die Topologie und/oder Komponentenauswahl an Änderungen der Anlage und neuen Situationen optimiert. Dies spart Zeit und Ressourcen bei der Umsetzung von Veränderungen.

Weiter ist es denkbar, dass die Aktualisierung eine Optimierung einer Topologie und/oder eine Auswahl von zu installierenden Komponenten der Anlage unter Berücksichtigung des wenigstens einen veränderten Teils der Anlage umfasst, um die aufgenommene Abweichung bei der Optimierung der Topologie und/oder bei der Komponentenauswahl neu zu berücksichtigen, und vorzugsweise, um den noch zu installierenden Teil der Anlage hinsichtlich seiner Topologie und/oder Komponentenauswahl zu optimieren. Die Optimierung kann beispielsweise durch die Anwendung von Algorithmen wie der Finite-Elemente-Methode oder regel-basierten Algorithmen durchgeführt werden.

Ferner ist es möglich, dass die Installationsvorgabe als eine digitale Installationsvorgabe ausgeführt ist, welche einen elektrischen und/oder mechanischen und/oder fluidtechnischen und/oder pneumatischen und/oder hydraulischen Aufbau der Anlage spezifiziert und vorzugsweise zur Generierung einer interaktiven Aufbauanleitung verwendet wird. Die Interaktion mit einem Benutzer kann dabei z. B. über eine Ein- und/oder Ausgabe erfolgen mittels eines Computers, bspw. eines Tablets und/oder Laptops und/oder Smartphones, und/oder mittels eines AR (Augmented Reality) Geräts und/oder eines VR (Virtual Reality) Geräts und/oder eines Sprachassistenten.

Ferner ist es denkbar, dass die Installationsvorgabe, vorzugsweise umfassend einen digitalen, elektrischen Schaltplan, eine Auswahl und/oder Anschlussspezifikation von mehreren zu installierenden Modulen, insbesondere Feldbusmodulen, spezifiziert, welche bei der Anlage, insbesondere außerhalb eines Schaltschranks, im Feld eingesetzt werden können, um weitere Komponenten der Anlage, insbesondere Geräte wie Sensoren und/oder Aktoren, zur Bereitstellung von Automatisierungsfunktionen dezentral elektrisch miteinander zu verbinden. Die Module können dabei als Verteiler ausgeführt sein, um die weiteren Komponenten der Anlage zu verbinden und/oder deren Signale zu sammeln und ggf. an eine zentrale Steuereinheit weiterzuleiten. Alternativ oder zusätzlich können die Module zumindest teilweise auch als sogenannte I/O-Module und/oder IO-Link-Module ausgeführt sein, welche die Anbindung von Sensoren und/oder Aktoren ermöglichen. Die Installationsvorgabe kann dabei auch Informationen über die Art und Weise der Verbindung der Module untereinander und mit anderen Komponenten der Anlage, insbesondere der Steuereinheit, aufweisen. Hierbei kann es sich beispielsweise um eine Verbindung mittels eines Bussystems handeln. Durch die Verwendung der Installationsvorgabe kann eine schnelle und effiziente Installation der Anlage im Feld ermöglicht werden.

Von weiterem Vorteil kann vorgesehen sein, dass die computergestützte Installation zumindest umfasst:
- Erfassen eines Identifikators, welcher aus einer Eingabe eines Identifikationsmittels einer zu installierenden Komponente für die Anlage durch einen Benutzer resultiert, vorzugsweise durch ein automatisiertes Einlesen des Identifikationsmittels mittels eines Scanners, vorzugsweise Handscanners,
- Auswerten des erfassten Identifikators auf Basis der Installationsvorlage, um wenigstens einen Installationsort für die zu installierende Komponente zu ermitteln,
- Ausgeben eines Installationsvorschlags für die zu installierende Komponente an den Benutzer, wobei der Installationsvorschlag den wenigstens einen Installationsort angibt.

Dabei kann die Abweichungsspezifikation auf Basis einer weiteren Eingabe des Benutzers ermittelt werden, wobei vorzugsweise die weitere Eingabe des Benutzers als Reaktion auf den ausgegebenen Installationsvorschlag angefordert wird. Somit bietet die Erfindung eine effiziente und benutzerfreundliche Methode zur Installation von Komponenten in Anlagen.

Ein eindeutiger oder eineindeutiger Identifikator wie ein Betriebsmittelkennzeichen (BMK) kann bspw. automatisch von einem eingelesenen Identifikationsmittel erkannt werden, das an der zu installierenden Komponente angebracht ist. Das Einlesen kann z. B. mittels eines Handscanners erfolgen, welcher hierzu vorzugsweise über Funk mit einer Datenverarbeitungsvorrichtung verbunden ist. Der Identifikator kann auf Basis der Installationsvorlage analysiert werden, um den optimalen Installationsort für die Komponente zu bestimmen. Auf Grundlage der Analyse kann ein Installationsvorschlag generiert und dem Benutzer ausgegeben werden, der bspw. den vorgeschlagenen Installationsort bestätigt oder einen der vorgeschlagenen Installationsorte auswählt. Sollte der Benutzer einen abweichenden Installationsort wünschen, kann dies ggf. durch Eingabe einer spezifischen Anpassung angegeben werden.

Es kann optional möglich sein, dass die computergestützte Installation zumindest umfasst:
- Erfassen eines Identifikators, welcher aus einer Eingabe eines Identifikationsmittels einer zu installierenden Komponente für die Anlage durch einen Benutzer resultiert, wobei die zu installierende Komponente ein Kabel und/oder einen Steckverbinder umfasst,
- Auswerten des erfassten Identifikators auf Basis der Installationsvorlage, um wenigstens einen Anschluss für die zu installierende Komponente zu ermitteln,
- Ausgeben eines Installationsvorschlags für die zu installierende Komponente an den Benutzer, wobei vorzugsweise der Installationsvorschlag den wenigstens einen Anschluss angibt.

Ebenfalls ist es hierbei denkbar, die Abweichungsspezifikation auf Basis einer weiteren Eingabe des Benutzers ermittelt wird, wobei die weitere Eingabe des Benutzers als Reaktion auf den ausgegebenen Installationsvorschlag angefordert wird. Es wird hierbei der Vorteil erzielt, dass die Installation von Komponenten in einer Anlage durch eine automatisierte und effiziente Methode unterstützt wird. Die Erfassung eines Identifikators aus einem Einlesevorgang ermöglicht es dem System, die Komponente zu identifizieren und auf dieser Basis einen spezifischen Anschluss für die zu installierende Komponente zu identifizieren. Ebenfalls kann hierbei ein Scanner wie ein Handscanner zum Einlesen verwendet werden. Durch das Auswerten des Identifikators auf Basis der Installationsvorlage und das Generieren eines Installationsvorschlags wird der Prozess vereinfacht und beschleunigt, da der Benutzer nicht mehr aufwendig nach dem richtigen Anschluss suchen muss. Die Abweichungsspezifikation ermöglicht es dem System, auf individuelle Änderungen durch den Benutzer einzugehen und alternative Anschlüsse zu berücksichtigen, wenn bspw. der initial vorgeschlagene Anschluss nicht geeignet ist.

Nach einer weiteren Möglichkeit kann vorgesehen sein, dass anschließend automatisiert erkannt wird, ob der Benutzer die Installation der zu installierenden Komponente entsprechend dem Installationsvorschlag vorgenommen hat, vorzugsweise durch eine automatisierte Auswertung von wenigstens einem Anschluss der zu installierenden Komponente und/oder wenigstens eines Moduls, insbesondere elektrischen Verteilers und/oder Feldbusmoduls, der Anlage. Dies hat den Vorteil, dass auf eine Benutzereingabe verzichtet und dennoch die Übernahme des Installationsvorschlags überprüft werden kann. Damit ist es möglich, automatisiert die Installationsfortschritts- und/oder Abweichungsspezifikation zu ermitteln. Mit anderen Worten kann auf Basis der Erkennung automatisiert die Installationsfortschrittsspezifikation ergänzt werden, wenn die Installation der zu installierenden Komponente entsprechend dem Installationsvorschlag durchgeführt wurde, und andernfalls die Abweichungsspezifikation ermittelt wird. Hierdurch können die an der Anlage, insbesondere Maschine, während der Installation vorgenommenen Änderungen automatisch von einer digitalen Entwurfsumgebung erkannt werden. Durch die Erfindung kann daher eine automatisierte Installationsüberwachung bereitgestellt werden, bei welcher die Integration von Komponenten bei der Installation und/oder Wartung von Anlagen effizienter und schneller erfolgt. Dabei können die Komponenten ggf. auch auf Kompatibilität und korrekte Verbindungen überprüft werden. Fehler bei der Installation können frühzeitig erkannt und somit Reparaturkosten sowie Ausfallzeiten minimiert werden.

Eine automatisierte Analyse von Verbindungen und Verteilern kann eine präzise Identifizierung von Abweichungen bei der Installation ermöglicht, was die Fehlerbehebung und Optimierung der Anlage verbessert.

Zusätzlich kann auf Basis der Aktualisierung eine umfassende Dokumentation der Installationsprozesse bereitgestellt werden, die Wartungs- und Servicearbeiten erleichtert.

Von weiterem Vorteil kann vorgesehen sein, dass die Abweichungsspezifikation von einer digitalen Entwicklungsumgebung des computergestützten Installationssystems ermittelt wird, welche einem Benutzer bei der Installation der Anlage durch eine interaktive Aufbauanleitung unterstützt. Dabei kann vorzugsweise die Abweichungsspezifikation und/oder die Installationsfortschrittsspezifikation automatisiert auf Basis der Interaktion der digitalen Entwicklungsumgebung mit dem Benutzer in Echtzeit während der Installation ermittelt werden. In Echtzeit kann in diesem Zusammenhang bedeuten, dass die Abweichungsspezifikation und/oder die Installationsfortschrittsspezifikation während der Installation kontinuierlich und/oder wiederholt und/oder unmittelbar und/oder mit einer vorgegebenen Latenz aktualisiert werden, um dem Benutzer eine schnelle und präzise Rückmeldung über den Fortschritt der Installation sowie über eventuelle Abweichungen von der vorgegebenen Installationsvorlage, insbesondere Installationsanleitung, zu geben. Dies kann dazu beitragen, Fehler und Verzögerungen bei der Installation zu minimieren und eine effiziente und zuverlässige Installation der Anlage zu gewährleisten.

Um die Echtzeitfähigkeit zu gewährleisten, ist es vorteilhafterweise vorgesehen, dass die Abweichungsspezifikation und/oder die Installationsfortschrittsspezifikation von der digitalen Entwicklungsumgebung des computergestützten Installationssystems anhand der Interaktion mit dem Benutzer, insbesondere Bestätigung von Installationsvorschlägen, automatisch im Hintergrund ermittelt wird. Im Vordergrund erfolgt somit die interaktive Aufbauanleitung und im Hintergrund die Analyse zur Ermittlung der Abweichungsspezifikation und/oder Installationsfortschrittsspezifikation.

Weiter kann die Installationsvorgabe auf Basis einer Auswertung der ermittelten Installationsfortschrittsspezifikation und der ermittelten Abweichungsspezifikation während der Installation aktualisiert werden, sodass vorzugsweise ein Schaltplan für die Installation dynamisch während der Installation durch die digitale Entwicklungsumgebung angepasst und an die spezifizierte Abweichung von der ursprünglichen Installationsvorgabe angeglichen wird. Die Entwicklungsumgebung kann daher den Installationsprozess durch die automatische Bestimmung von relevanten Informationen bei der Installation wie der Abweichungsspezifikation und der Installationsfortschrittsspezifikation verbessern. Dabei kann eine präzise Darstellung und Nachverfolgbarkeit des Installationsprozesses ermöglicht werden. Ferner ermöglicht diese Datenbasis eine automatisierte Anpassung der Installationsvorlage auf Basis der tatsächlich durchgeführten Installation, welche in der Praxis oft Abweichungen und Veränderungen zur Vorlage aufweist.

Es ist ferner denkbar, dass die nachfolgenden Schritte bei der Durchführung der Aktualisierung vorgesehen sind:
- Erkennen eines Fehlers bei der Installation und/oder
- Erkennen einer Inkompatibilität der spezifizierten Abweichung mit dem übrigen Teil der Anlage, bevorzugt durch eine automatisierte Kompatibilitätsbeurteilung, und/oder
- Erfassen eines Anpassungswunsches eines Benutzers, vorzugsweise durch ein Human Machine Interface,
wobei vorteilhafterweise anschließend die folgenden Schritte durchgeführt werden:
- Durchführen a) einer automatisierten Behebung des Fehlers und/oder der Inkompatibilität durch eine automatisierte Anpassung der Installationsvorgabe und/oder b) einer automatisierten Anpassung entsprechend dem Anpassungswunsch, oder
- Ausgeben einer Aufforderung an den Benutzer, die Installationsvorgabe manuell zu aktualisieren, wenn die automatisierte Anpassung nicht möglich ist, sowie
- Auswerten einer Benutzereingabe, um die manuelle Aktualisierung in der Installationsvorgabe zu hinterlegen.

Die Erfindung kann es dabei ermöglichen, Fehler bei der Durchführung der Installation zu erkennen, automatisiert anzupassen und ggf. auch manuelle Anpassungswünsche von Benutzern zu berücksichtigen. Es kann bspw. der Teil, der hierbei verändert wurde, in der Installationsvorlage, insbesondere im Schaltplan, automatisch aktualisieren werden. Auch ist es möglich, dass der Installateur, d. h. der Benutzer, aufgefordert wird, wenn nötig, den digitalen Schaltplan manuell zu ändern.

Gemäß einer vorteilhaften Weiterbildung der Erfindung kann vorgesehen sein, dass die aktualisierte Installationsvorgabe nicht-flüchtig abgespeichert wird, um die Abweichung bei der Installation des wenigstens einen veränderten Teils der Anlage für mehrere Benutzer nach einer Fertigstellung der Installation der Anlage zur Verfügung zu stellen. Mit anderen Worten ist es möglich, dass die Installationsvorlage und vorzugsweise auch Installationsanweisungen und/oder etwaige bei der Aktualisierung durchgeführte Veränderungen und insbesondere Optimierungen für eine Anlage, die modifiziert wurde, nicht nur vorübergehend gespeichert werden, sondern auch dauerhaft gespeichert werden können. Dies ermöglicht es mehreren Benutzern nach Abschluss der Installation, auf die spezifischen Anpassungen zuzugreifen und sie für weitere Installationen (d. h. auch Wartung oder Verbesserungen) zu nutzen. Entsprechend kann diese Funktionalität ggf. auch für Schulungen und Wartungsarbeiten relevant sein. Darüber hinaus können die Abweichungen der aktualisierten Installationsvorgabe zur ursprünglichen Installationsvorgabe kenntlich gemacht werden.

Vorteilhafterweise kann bei der Erfindung vorgesehen sein, dass die aktualisierte Installationsvorgabe in eine digitale Vorlage umgewandelt wird, um die Abweichung bei der Installation des wenigstens einen veränderten Teils der Anlage für einen Benutzer zur Installation von weiteren industriellen Anlagen auf Basis der Vorlage zur Verfügung zu stellen. Dies hat den Vorteil, dass durch die Umwandlung der aktualisierten Installationsvorgabe in eine Vorlage für Benutzer ein praktisches Verfahren zur Implementierung dieser Änderungen bei anderen industriellen Anlagen geschaffen wird. Die Vorlage kann als Muster oder Leitfaden dienen und so den Prozess der Installation beschleunigen und vereinfachen. Zusätzlich können durch die Nutzung von Vorlagen auch Kosten gespart werden, da die Dokumentation für jedes neue Projekt nicht von Grund auf neu erstellt werden muss. Die Vorlage kann an die spezifischen Bedürfnisse angepasst und als Basis für weitere Änderungen verwendet werden. Es kann ferner im Anschluss der Installation durch einen Benutzer entschieden werden, ob aus der aktualisierten Installationsvorlage ein Maschinentemplate für weitere Projekte erstellt werden soll.

Bevorzugt kann im Rahmen der Erfindung vorgesehen sein, dass die Installationsvorgabe vor der Aktualisierung als ursprüngliche Installationsvorgabe nicht-flüchtig gespeichert wird, und eine Vergleichsausgabe an einen Benutzer ausgegeben wird, um dem Benutzer einen Vergleich der ursprünglichen Installationsvorgabe mit der aktualisierten Installationsvorgabe zu ermöglichen, und vorzugsweise, um alle während der Aktualisierung vorgenommenen Änderungen zu identifizieren. Somit ist es möglich, dass die ursprüngliche Konfiguration vor der Aktualisierung gespeichert und dem Benutzer zur Verfügung gestellt wird. Dies ermöglicht einen Vergleich zwischen den beiden Zuständen, um gezielt Änderungen zu identifizieren. Die Speicherung der ursprünglichen Konfiguration kann dabei in einer nichtflüchtigen Form erfolgen, was bedeutet, dass die Daten auch nach Abschluss der Aktualisierung verfügbar bleiben. Zusätzlich wird ggf. eine Vergleichsausgabe an den Benutzer bereitgestellt, um die Änderungen visuell darzustellen und zu erklären. Dies kann dem Benutzer helfen, die vorgenommenen Änderungen besser zu verstehen und gegebenenfalls auf Anomalien oder Fehler bei der Aktualisierung zu reagieren.

Der Benutzer kann auch während der Installation durch eine digitale Entwicklungsumgebung aufgefordert werden, die (automatisierten) Aktualisierungen der Installationsvorgabe freizugeben und/oder manuell anzupassen.

Gemäß einer vorteilhaften Weiterbildung der Erfindung kann vorgesehen sein, dass die die Aktualisierung durch eine digitale Entwicklungsumgebung des Installationssystems zur Planung der industriellen Anlage vorgenommen wird, wobei die digitale Entwicklungsumgebung vorzugsweise in ein computergestütztes Konstruktionssystem integriert ist. Dabei kann die aktualisierte Installationsvorgabe verwendet werden, um ein Simulationsmodell der industriellen Anlage zu erzeugen. Die digitale Umgebung ermöglicht es insbesondere, Änderungen schnell und automatisiert vorzunehmen. Die Verwendung der aktualisierten Installationsvorgabe zur Erstellung eines Simulationsmodells ermöglicht zusätzlich eine realistische Prüfung des Systems, was zu einer verbesserten Sicherheit und Effizienz führt.

Nach einer weiteren Möglichkeit kann vorgesehen sein, dass die die Aktualisierung durch eine digitale Entwicklungsumgebung des Installationssystems zur Planung der industriellen Anlage vorgenommen wird. Weiter kann die aktualisierte Installationsvorgabe automatisiert ausgewertet werden, um einen digitalen Zwilling der industriellen Anlage bereitzustellen. Auf diese Weise wird durch die Erfindung ermöglicht, dass die digitale Entwicklungsumgebung des Installationssystems für industrielle Anlagen zur Planung optimal genutzt werden kann. Dabei erfolgt die Aktualisierung der Installationsvorgabe ggf. automatisch und wird evaluiert, um einen digitalen Zwilling der Anlage zu generieren. Dies ermöglicht eine effizientere und präzisere Planung sowie eine schnellere Integration von Änderungen in den Betriebsablauf. Zusätzlich können auch Kosten gesenkt werden, da manuelle Arbeiten reduziert werden können.

Ebenfalls Gegenstand der Erfindung ist eine Vorrichtung zur Datenverarbeitung, umfassend Mittel zur Ausführung des Verfahrens bzw. der Schritte des erfindungsgemäßen Verfahrens. Damit bringt die erfindungsgemäße Vorrichtung zur Datenverarbeitung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann ferner zumindest teilweise nicht-flüchtig und/oder als Software zum Download und/oder als Cloud-Service und/oder als ausführbares Programm und/oder als Konfigurationsdatei und/oder als Programmbibliothek und/oder als Quelltext und/oder in kompilierter und/oder verschlüsselter und/oder komprimierter Form und/oder in einer Kombination davon vorliegen.

Als der Computer kann eine Datenverarbeitungsvorrichtung, vorzugsweise die erfindungsgemäße Vorrichtung zur Datenverarbeitung, vorgesehen sein.

Die erfindungsgemäße Vorrichtung zur Datenverarbeitung und vorzugsweise der Computer kann dazu ausgebildet sein, das erfindungsgemäße Computerprogramm auszuführen. Hierzu kann die erfindungsgemäße Vorrichtung zur Datenverarbeitung wenigstens einen Prozessor aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass die erfindungsgemäße Vorrichtung zur Datenverarbeitung zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Die erfindungsgemäße Vorrichtung zur Datenverarbeitung kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie bspw. zur Bluetooth- oder Nahfeldkommunikation (NFC) aufweisen. Ferner kann die erfindungsgemäße Vorrichtung zur Datenverarbeitung als ein oder mehrere Steuergeräte, d. h. auch als ein System aus Steuergeräten, ausgeführt sein. Die erfindungsgemäße Vorrichtung zur Datenverarbeitung kann vollständig oder teilweise auch in einer Cloud und/oder als ein Server vorgesehen sein, um über die Schnittstelle die Datenverarbeitung für eine lokale Anwendung zur Verfügung zu stellen. Entsprechend kann die erfindungsgemäße Vorrichtung zur Datenverarbeitung auch als ein verteiltes System ausgebildet sein. Auch ist es möglich, dass die erfindungsgemäße Vorrichtung zur Datenverarbeitung als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer und/oder in die erfindungsgemäße Vorrichtung zur Datenverarbeitung integriert sein.

Darüber hinaus kann das erfindungsgemäße Verfahren auch als ein computerimplementiertes Verfahren ausgeführt sein. Alternativ oder zusätzlich können jeder einzelne oder sämtliche der offenbarten Verfahrensschritte optional computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer digitalen Entwicklungsumgebung,
- Fig. 2: eine schematische Darstellung einer zumindest teilweisen Installationsvorgabe,
- Fig. 3: eine schematische Darstellung eines Verfahrens nach Ausführungsvarianten der Erfindung.
- Fig. 4: eine schematische Darstellung eines Computerprogramms und einer Datenverarbeitungsvorrichtung nach Ausführungsvarianten der Erfindung.

In den nachfolgenden Figuren werden für die gleichen technischen Merkmale auch von unterschiedlichen Ausführungsbeispielen die identischen Bezugszeichen verwendet.

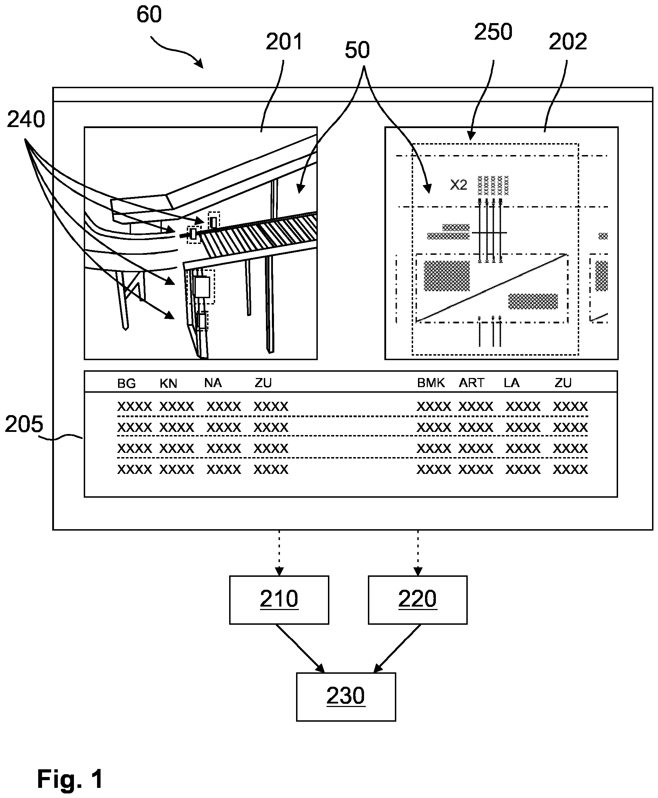

Fig. 1 zeigt eine beispielhafte digitale Entwicklungsumgebung 60, welche zur Ausführung des Verfahrens 100 nach Ausführungsvarianten der Erfindung verwendet werden kann. Für die computergestützte Installation kann die Entwicklungsumgebung Teil eines Installationssystems 60 sein. Das Installationssystem und insbesondere die Entwicklungsumgebung kann dabei eine Benutzerinteraktion auswerten und/oder veranlassen, um für einen computergestützten Aufbau der Anlage 50 verwendet zu werden. Im dargestellten Beispiel findet hierzu eine Ausgabe einer ersten Darstellung 201, vorzugsweise MCAD-Darstellung, und einer zweiten Darstellung 202, vorzugsweise ECAD-Darstellung, über eine grafische Benutzeroberfläche statt. Darüber hinaus sind andere zusätzliche oder alternative Darstellungsvarianten, z. B. pneumatische Darstellungen, und Ausgaben, z. B. über VR, AR oder akustisch, denkbar. Die Ausgaben und Darstellungen dienen dazu, die Installationsvorgabe 250 auszugeben und/oder zu visualisieren und damit eine Installation wie eine Erstinstallation und/oder Wartung und/oder Reparatur und/oder Erweiterung der Anlage 50 computergestützt zu assistieren.

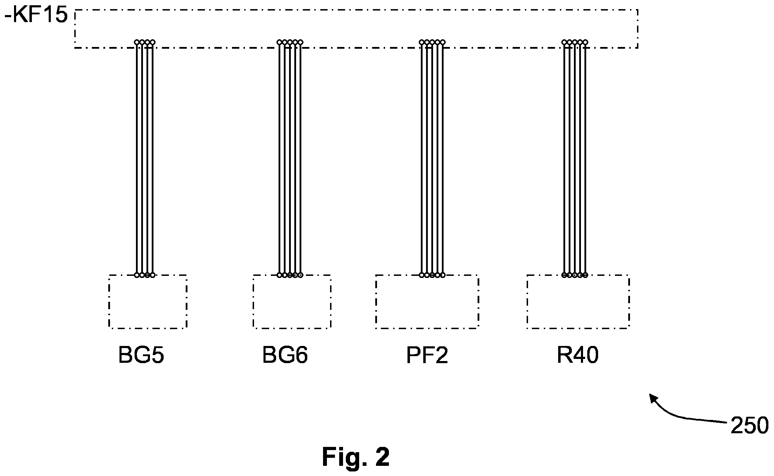

Die Installationsvorgabe 250 kann Informationen aufweisen, die zum Aufbau der Anlage 50 benötigt werden. Dies kann bspw. ein Schaltplan sein, welcher angibt, wie Komponenten 70 der Anlage 50 verbunden werden müssen. Auch ist es möglich, dass die Installationsvorgabe 250 eine Anzahl und/oder Art der Komponenten 70 spezifiziert. In Fig. 2 ist beispielhaft dargestellt, dass die Installationsvorgabe 250 zumindest eine Verschaltung von Komponenten 70 angeben kann und die Komponenten 70 darin über Betriebsmittelkennzeichen identifiziert werden können.

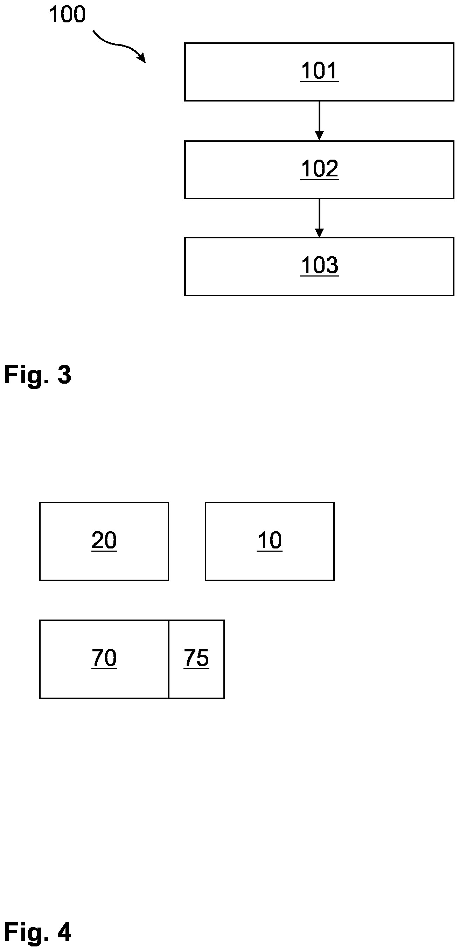

Die Komponenten 70, insbesondere Verteiler, oder Geräte wie Sensoren und Aktoren oder Kabel, können bei der computergestützten Installation bspw. nacheinander durch einen Benutzer über ihre Identifikationsmittel 75 eingescannt werden (vgl. Fig. 4), damit ein jeweiliger Installationsvorschlag wie eine mögliche Einbauposition in der Anlage 50 für den Benutzer ausgegeben/angezeigt werden kann. Für Kabel können bspw. als Installationsvorschlag die Anschlussmöglichkeiten an einem Verteiler dargestellt und die anzuschließenden Anschlüsse/Ports am Verteiler durch LEDs hervorgehoben werden.

Während der computergestützten Installation kann der Benutzer/Installateur bspw. im Feld feststellen, dass eine Abweichung von der digitalen Installationsvorgabe, insbesondere eines digitalen Schaltplans, vorgenommen werden soll. Während der Installation nimmt dieser dann bspw. eine Veränderung an der Anlage und/oder der Anlagenplanung vor und es muss nachträglich ein Teil der Installationsvorgabe (d. h. des Soll-Plans) aktualisiert werden. Durch die Abweichung entsteht damit eine Unstimmigkeit zwischen Soll- und Ist-Plan.

Fig. 3 veranschaulicht gemäß Ausführungsbeispielen der Erfindung ein Verfahren 100 zur Aktualisierung der Installationsvorgabe 250 für die computergestützte Installation, d. h. insbesondere Neuinstallation und/oder Wartung, der industriellen Anlage 50 mittels des computergestützten Installationssystems 60. Dies dient dazu, um die Installationsvorgabe 250 an die tatsächliche Ausführung der Installation anzupassen. Gemäß einem ersten Verfahrensschritt 101 kann dabei eine Ermittlung einer Installationsfortschrittsspezifikation 210 vorgesehen sein, die wenigstens einen bereits in Übereinstimmung mit der Installationsvorgabe 250 installierten Teil der Anlage 50 spezifiziert. Sodann kann gemäß einem zweiten Verfahrensschritt 102 eine Abweichungsspezifikation 220 ermittelt werden, die wenigstens einen veränderten Teil der Anlage 50 spezifiziert, welcher abweichend von der Installationsvorgabe 250 installiert worden ist oder installiert werden soll. Die Abweichungsspezifikation 220 spezifiziert somit insbesondere die von einem Benutzer vorgenommene Abweichung, die nicht mehr mit der Installationsvorgabe 250 übereinstimmt. Anschließend kann gemäß einem dritten Verfahrensschritt 103 eine Durchführung der Aktualisierung der Installationsvorgabe 250 auf Basis der ermittelten Installationsfortschrittsspezifikation 210 und der ermittelten Abweichungsspezifikation 220 erfolgen.

In Fig. 1 ist ferner visualisiert, dass das Durchführen 103 der Aktualisierung eine Ermittlung einer Vergleichsspezifikation 230 umfassen kann, die vorzugsweise aus einem automatisierten Vergleich der ermittelten Installationsfortschrittsspezifikation 210 mit der Installationsvorgabe 250 resultiert, um wenigstens einen noch zu installierenden Teil der Anlage 50 zu ermitteln. Der noch zu installierende Teil ist somit ein noch nicht installierter Teil der Anlage 50, welcher daher problemlos bei der Aktualisierung angepasst werden kann, ohne dass dadurch zusätzlicher Aufwand bei der Installation entstehen würde.

Anschließend kann das Anpassen der Installationsvorgabe 250 auf Basis der ermittelten Abweichungsspezifikation 220 erfolgen, um die Abweichung bei der Installation des wenigstens einen veränderten Teils der Anlage 50 in der Installationsvorgabe 250 aufzunehmen. Weiter kann ein Anpassen der Installationsvorgabe 250 auf Basis der ermittelten Vergleichsspezifikation 230 und beschränkt auf den wenigstens einen noch zu installierenden Teil der Anlage 50 erfolgen, um den wenigstens einen noch zu installierenden Teil in der Installationsvorgabe 250 an die aufgenommene Abweichung anzupassen. Dabei können ggf. lediglich solche Anpassungen/Optimierungen vorgenommen werden, welche keinen wesentlich größeren Aufwand oder zeitliche Verzögerungen bei der Installation mit sich bringen. Bspw. kann eine Verschaltung der Komponenten geändert werden, sofern Kabel mit ausreichender Kabellänge vorrätig sind.

Weiter kann die Aktualisierung eine Optimierung einer Topologie und/oder eine Auswahl von zu installierenden Komponenten 70 der Anlage 50 unter Berücksichtigung des wenigstens einen veränderten Teils der Anlage 50 umfasst, um die aufgenommene Abweichung bei der Optimierung der Topologie und/oder bei der Komponentenauswahl neu zu berücksichtigen, und vorzugsweise, um den noch zu installierenden Teil der Anlage 50 hinsichtlich seiner Topologie und/oder Komponentenauswahl zu optimieren.

Auch ist es denkbar, dass bei der Aktualisierung und insbesondere bei der Anpassung/Optimierung des noch zu installierenden Teils der Anlage 50 an die Abweichung auch ursprünglich in der Installationsvorgabe 250 vorgesehene Komponenten 70 durch neue Komponenten 70 anderer Art ersetzt werden, sofern diese neuen Komponenten 70 vorrätig oder innerhalb einer vorgegebenen Zeit lieferbar sind. Hierzu kann das Installationssystem z. B. auch eine Schnittstelle zu einem ERP-System (Enterprise Resource Planning System) aufweisen, um den Bestand und/oder Lieferzeiten auszuwerten.

In Fig. 4 ist dargestellt, dass optional auch ein Identifikator erfasst werden kann, welcher aus einer Eingabe eines Identifikationsmittels 75 einer zu installierenden Komponente 70 für die Anlage 50 durch einen Benutzer resultiert, vorzugsweise durch ein automatisiertes Einlesen des Identifikationsmittels 75 mittels eines nicht explizit gezeigten Scanners. Dies ermöglicht es, durch eine Auswertung des erfassten Identifikators auf Basis der Installationsvorlage 250, dass wenigstens ein Installationsort für die zu installierende Komponente 70 ermittelt werden kann. Auf dieser Basis kann der Benutzer für die Installation angeleitet werden und bspw. einen der Installationsvorschläge 240 annehmen, oder eine Abweichung vornehmen, die dann durch die Abweichungsspezifikation 220 berücksichtigt wird. In Fig. 1 ist gezeigt, dass der Installationsvorschlag 240 z. B. grafisch ausgegeben werden kann.

In Fig. 4 sind ebenfalls ein Computerprogramm 20 und eine Vorrichtung 10 zur Datenverarbeitung gezeigt, die eingerichtet ist, das Verfahren 100 nach Ausführungsbeispielen der Erfindung auszuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Vorrichtung
- 20: Computerprogramm
- 50: Anlage
- 60: Entwicklungsumgebung
- 70: Komponente
- 75: Identifikationsmittel
- 100: Verfahren
- 201: erste Darstellung, MCAD-Darstellung
- 202: zweite Darstellung, ECAD-Darstellung
- 205: Eingabeerfassung
- 210: Installationsfortschrittsspezifikation
- 220: Abweichungsspezifikation
- 230: Vergleichsspezifikation
- 240: Installationsvorschlag
- 250: Installationsvorgabe

## Patentansprüche

1. Verfahren (100) zur Aktualisierung einer Installationsvorgabe (250) für eine computergestützte Installation, insbesondere Neuinstallation und/oder Wartung, einer industriellen Anlage (50) mittels eines computergestützten Installationssystems (60), um die Installationsvorgabe (250) an eine tatsächliche Ausführung der Installation anzupassen, umfassend:
- Ermitteln (101) einer Installationsfortschrittsspezifikation (210), die wenigstens einen bereits in Übereinstimmung mit der Installationsvorgabe (250) installierten Teil der Anlage (50) spezifiziert,
- Ermitteln (102) einer Abweichungsspezifikation (220), die wenigstens einen veränderten Teil der Anlage (50) spezifiziert, welcher abweichend von der Installationsvorgabe (250) installiert worden ist oder installiert werden soll,
- Durchführen (103) der Aktualisierung der Installationsvorgabe (250) auf Basis der ermittelten Installationsfortschrittsspezifikation (210) und der ermittelten Abweichungsspezifikation (220).

2. Verfahren (100) nach Anspruch 1,
**dadurch gekennzeichnet,**
**dass** das Durchführen (103) der Aktualisierung ferner umfasst:
- Ermitteln einer Vergleichsspezifikation (230), die vorzugsweise aus einem automatisierten Vergleich der ermittelten Installationsfortschrittsspezifikation (210) mit der Installationsvorgabe (250) resultiert, um wenigstens einen noch zu installierenden Teil der Anlage (50) zu ermitteln, welcher noch nicht installiert worden ist, sodass die Vergleichsspezifikation (230) den wenigstens einen noch zu installierenden Teil spezifiziert,
- Anpassen der Installationsvorgabe (250) auf Basis der ermittelten Abweichungsspezifikation (220), um die Abweichung bei der Installation des wenigstens einen veränderten Teils der Anlage (50) in der Installationsvorgabe (250) aufzunehmen,
- Anpassen der Installationsvorgabe (250) auf Basis der ermittelten Vergleichsspezifikation (230) und beschränkt auf den wenigstens einen noch zu installierenden Teil der Anlage (50), um den wenigstens einen noch zu installierenden Teil in der Installationsvorgabe (250) an die aufgenommene Abweichung anzupassen.

3. Verfahren (100) nach einem der vorhergehenden Ansprüche,
**dadurch gekennzeichnet,**
**dass** das Durchführen (103) der Aktualisierung ferner umfasst:
- Anpassen der Installationsvorgabe (250) beschränkt auf den wenigstens einen veränderten Teil und den wenigstens einen noch zu installierenden Teil der Anlage (50), um den wenigstens einen noch zu installierenden Teil in der Installationsvorgabe (250) an den wenigstens einen veränderten Teil und/oder die aufgenommene Abweichung anzupassen, und dabei vorzugsweise den bereits in Übereinstimmung mit der Installationsvorgabe (250) installierten Teil der Anlage (50) unverändert zu lassen,
wobei das computergestützte Installationssystem (60) eine digitale Entwicklungsumgebung (60) zur Planung der Anlage (50) umfasst, um die computergestützte Installation und die Aktualisierung zumindest teilweise durch die digitale Entwicklungsumgebung (60) vorzunehmen,
wobei die Aktualisierung eine Optimierung einer Topologie und/oder eine Auswahl von zu installierenden Komponenten (70) der Anlage (50) unter Berücksichtigung des wenigstens einen veränderten Teils der Anlage (50) umfasst, um die aufgenommene Abweichung bei der Optimierung der Topologie und/oder bei der Komponentenauswahl neu zu berücksichtigen, und vorzugsweise, um den noch zu installierenden Teil der Anlage (50) hinsichtlich seiner Topologie und/oder Komponentenauswahl zu optimieren,
wobei die Installationsvorgabe (250) als eine digitale Installationsvorgabe (250) ausgeführt ist, welche einen elektrischen und/oder mechanischen und/oder fluidtechnischen und/oder pneumatischen und/oder hydraulischen Aufbau der Anlage (50) spezifiziert und vorzugsweise zur Generierung einer interaktiven Aufbauanleitung verwendet wird,
wobei die Installationsvorgabe (250), vorzugsweise umfassend einen digitalen, elektrischen Schaltplan, eine Auswahl und/oder Anschlussspezifikation von mehreren zu installierenden Modulen, insbesondere Feldbusmodulen, spezifiziert, welche bei der Anlage (50), insbesondere außerhalb eines Schaltschranks, im Feld eingesetzt werden, um Geräte der Anlage (50) zur Bereitstellung von Automatisierungsfunktionen dezentral elektrisch miteinander zu verbinden.

4. Verfahren (100) nach einem der vorhergehenden Ansprüche,
**dadurch gekennzeichnet,**
**dass** die computergestützte Installation zumindest umfasst:
- Erfassen eines Identifikators, welcher aus einer Eingabe eines Identifikationsmittels (75) einer zu installierenden Komponente (70) für die Anlage (50) durch einen Benutzer resultiert, vorzugsweise durch ein automatisiertes Einlesen des Identifikationsmittels (75) mittels eines Scanners,
- Auswerten des erfassten Identifikators auf Basis der Installationsvorlage (250), um wenigstens einen Installationsort für die zu installierende Komponente (70) zu ermitteln,
- Ausgeben eines Installationsvorschlags (240) für die zu installierende Komponente (70) an den Benutzer, wobei der Installationsvorschlag (240) den wenigstens einen Installationsort angibt,
wobei die Abweichungsspezifikation (220) auf Basis einer weiteren Eingabe des Benutzers ermittelt wird, wobei die weitere Eingabe des Benutzers als Reaktion auf den ausgegebenen Installationsvorschlag (240) angefordert wird.

5. Verfahren (100) nach einem der vorhergehenden Ansprüche,
**dadurch gekennzeichnet,**
**dass** die computergestützte Installation zumindest umfasst:
- Erfassen eines Identifikators, welcher aus einer Eingabe eines Identifikationsmittels (75) einer zu installierenden Komponente (70) für die Anlage (50) durch einen Benutzer resultiert, wobei die zu installierende Komponente (70) ein Kabel und/oder einen Steckverbinder umfasst,
- Auswerten des erfassten Identifikators auf Basis der Installationsvorlage, um wenigstens einen Anschluss für die zu installierende Komponente (70) zu ermitteln,
- Ausgeben eines Installationsvorschlags (240) für die zu installierende Komponente (70) an den Benutzer, wobei der Installationsvorschlag (240) den wenigstens einen Anschluss angibt,
wobei die Abweichungsspezifikation (220) auf Basis einer weiteren Eingabe des Benutzers ermittelt wird, wobei die weitere Eingabe des Benutzers als Reaktion auf den ausgegebenen Installationsvorschlag (240) angefordert wird.

6. Verfahren (100) nach Anspruch 4 oder 5,
**dadurch gekennzeichnet,**
**dass** anschließend automatisiert erkannt wird, ob der Benutzer die Installation der zu installierenden Komponente (70) entsprechend dem Installationsvorschlag (240) vorgenommen hat, vorzugsweise durch eine automatisierte Auswertung von wenigstens einem Anschluss der zu installierenden Komponente (70) und/oder wenigstens eines Moduls, insbesondere elektrischen Verteilers und/oder Feldbusmoduls, der Anlage (50),
wobei auf Basis der Erkennung automatisiert die Installationsfortschrittsspezifikation (210) ergänzt wird, wenn die Installation der zu installierenden Komponente (70) entsprechend dem Installationsvorschlag (240) durchgeführt wurde, und andernfalls die Abweichungsspezifikation (220) ermittelt wird.

7. Verfahren (100) nach einem der vorhergehenden Ansprüche,
**dadurch gekennzeichnet,**
**dass** die Abweichungsspezifikation (220) von einer digitalen Entwicklungsumgebung (60) des computergestützten Installationssystems (60) ermittelt wird, welche einem Benutzer bei der Installation der Anlage (50) durch eine interaktive Aufbauanleitung unterstützt, wobei die Abweichungsspezifikation (220) und die Installationsfortschrittsspezifikation (210) automatisiert auf Basis der Interaktion der digitalen Entwicklungsumgebung (60) mit dem Benutzer in Echtzeit während der Installation ermittelt werden, und die Installationsvorgabe (250) auf Basis einer Auswertung der ermittelten Installationsfortschrittsspezifikation (210) und der ermittelten Abweichungsspezifikation (220) während der Installation aktualisiert wird, sodass ein Schaltplan für die Installation dynamisch während der Installation durch die digitale Entwicklungsumgebung (60) angepasst und an die spezifizierte Abweichung von der ursprünglichen Installationsvorgabe (250) angeglichen wird.

8. Verfahren (100) nach einem der vorhergehenden Ansprüche,
**dadurch gekennzeichnet,**
**dass** die nachfolgenden Schritte bei der Durchführung (103) der Aktualisierung vorgesehen sind:
- Erkennen eines Fehlers bei der Installation und/oder
- Erkennen einer Inkompatibilität der spezifizierten Abweichung mit dem übrigen Teil der Anlage (50) und/oder
- Erfassen eines Anpassungswunsches eines Benutzers,
wobei anschließend die folgenden Schritte durchgeführt werden:
- Durchführen a) einer automatisierten Behebung des Fehlers und/oder der Inkompatibilität durch eine automatisierte Anpassung der Installationsvorgabe (250) und/oder b) einer automatisierten Anpassung entsprechend dem Anpassungswunsch, oder
- Ausgeben einer Aufforderung an den Benutzer, die Installationsvorgabe (250) manuell zu aktualisieren, wenn die automatisierte Anpassung nicht möglich ist, sowie
- Auswerten einer Benutzereingabe, um die manuelle Aktualisierung in der Installationsvorgabe (250) zu hinterlegen.

9. Verfahren (100) nach einem der vorhergehenden Ansprüche,
**dadurch gekennzeichnet,**
**dass** die aktualisierte Installationsvorgabe (250) nicht-flüchtig abgespeichert wird, um die Abweichung bei der Installation des wenigstens einen veränderten Teils der Anlage (50) für mehrere Benutzer nach einer Fertigstellung der Installation der Anlage (50) zur Verfügung zu stellen.

10. Verfahren (100) nach einem der vorhergehenden Ansprüche,
**dadurch gekennzeichnet,**
**dass** die aktualisierte Installationsvorgabe (250) in eine digitale Vorlage umgewandelt wird, um die Abweichung bei der Installation des wenigstens einen veränderten Teils der Anlage (50) für einen Benutzer zur Installation von weiteren industriellen Anlagen (50) auf Basis der Vorlage zur Verfügung zu stellen.

11. Verfahren (100) nach einem der vorhergehenden Ansprüche,
**dadurch gekennzeichnet,**
**dass** die Installationsvorgabe (250) vor der Aktualisierung als ursprüngliche Installationsvorgabe (250) nicht-flüchtig gespeichert wird, und eine Vergleichsausgabe an einen Benutzer ausgegeben wird, um dem Benutzer einen Vergleich der ursprünglichen Installationsvorgabe (250) mit der aktualisierten Installationsvorgabe (250) zu ermöglichen, und vorzugsweise, um alle während der Aktualisierung vorgenommenen Änderungen zu identifizieren.

12. Verfahren (100) nach einem der vorhergehenden Ansprüche,
**dadurch gekennzeichnet,**
**dass** die die Aktualisierung durch eine digitale Entwicklungsumgebung (60) des Installationssystems (60) zur Planung der industriellen Anlage (50) vorgenommen wird, wobei die digitale Entwicklungsumgebung (60) vorzugsweise in ein computergestütztes Konstruktionssystem (CAE) integriert ist, wobei die aktualisierte Installationsvorgabe (250) verwendet wird, um ein Simulationsmodell der industriellen Anlage (50) zu erzeugen.

13. Verfahren (100) nach einem der vorhergehenden Ansprüche,
**dadurch gekennzeichnet,**
**dass** die die Aktualisierung durch eine digitale Entwicklungsumgebung (60) des Installationssystems (60) zur Planung der industriellen Anlage (50) vorgenommen wird, wobei die aktualisierte Installationsvorgabe (250) automatisiert ausgewertet wird, um einen digitalen Zwilling der industriellen Anlage (50) bereitzustellen.

14. Computerprogramm (20), umfassend Befehle, die bei der Ausführung des Computerprogramms (20) durch einen Computer (10) diesen veranlassen, das Verfahren nach einem der vorhergehenden Ansprüche auszuführen.

15. Vorrichtung (10) zur Datenverarbeitung, die eingerichtet ist, das Verfahren (100) nach einem der Ansprüche 1 bis 13 auszuführen.
